# EUROPEAN PATENT APPLICATION

(11) **EP 4 636 030 A1**
(43) Date of publication of application: **22.10.2025**
(21) Application number: 23903547.0
(22) Date of filing: 13.12.2023
(51) Int. Cl.: C08L 27/18, C08F 214/26, C08F 216/14, C08L 29/10, C09D 5/02, C09D 127/18, C09D 129/10

(54) **AQUEOUS DISPERSION**

(30) Priority: 16.12.2022 JP 2022201101
(71) Applicant: AGC INC., Chiyoda-ku, Tokyo 1008405 (JP)
(72) Inventor: SHIBASAKI, Kosuke, Tokyo 100-8405 (JP); YANAGIYA, Aoi, Tokyo 100-8405 (JP); TOYODA, Mizuna, Tokyo 100-8405 (JP); TAGUCHI, Daisuke, Tokyo 100-8405 (JP)
(74) Representative: Müller-Boré & Partner Patentanwälte PartG mbB
(86) International application number: PCT/JP2023/044688
(87) International publication number: WO 2024/128263

(57) **Abstract**

To provide an aqueous dispersion which is excellent in storage stability and from which a coating film excellent in water resistance can be formed. The aqueous dispersion of the present invention is an aqueous dispersion containing a fluorinated polymer having TFE units and PAVE units, and an aqueous medium, wherein the proportion of the PAVE units is 20 to 60 mol% to the total amount of the TFE units and the PAVE units, the content of the fluorinated polymer is 0.1 to 40 mass% to the total mass of the aqueous dispersion, the average particle size of the fluorinated polymer is 1 to 150 nm, the concentration of fluoride ions and the concentration of sulfate ions are each 50 mass ppm or less to the total mass of the aqueous medium in the aqueous dispersion, and the concentration of a hydrocarbon-based emulsifier is 100 mass ppm or less to the total mass of the fluorinated polymer.

## Description

### TECHNICAL FIELD

The present invention relates to an aqueous dispersion.

### BACKGROUND ART

Fluorinated polymers, which are excellent in heat resistance, chemical resistance, flame retardance, weather resistance, etc., are used in various industrial fields. Such fluoropolymers may sometimes be used in the form of an aqueous dispersion.

As a method for producing such an aqueous dispersion containing a fluorinated polymer, Patent Document 1 discloses a method of adding and mixing a nonionic surfactant to a mixture containing a perfluoroelastomer obtained by using monomers such as tetrafluoroethylene and a perfluoro(methyl vinyl ether) and deionized water.

### PRIOR ART DOCUMENTS

### PATENT DOCUMENTS

Patent Document 1: JP-A-2003-522232

### DISCLOSURE OF INVENTION

### TECHNICAL PROBLEM

In recent years, in coating material fields, from the viewpoint of environmental protection, an aqueous coating material containing a coating material resin and containing as a medium water alone or a mixture of water and a water-soluble organic solvent, has been developed. Such an aqueous coating material is required to be excellent in storage stability and is required to be such that a coating film formed by using it is excellent in water resistance.

The present inventors have evaluated an aqueous dispersion containing a fluorinated polymer as described in Patent Document 1 as an aqueous coating material and as a result found that water resistance of a coating film formed by using it can still be improved.

An object of the present invention is to provide an aqueous dispersion which is excellent in storage stability and from which a coating film excellent in water resistance can be formed.

### SOLUTION TO PROBLEM

The present inventors have conducted extensive studies and as a result found that the above object can be achieved by the following constitution.
[1] An aqueous dispersion containing a fluorinated polymer having units based on tetrafluoroethylene and units based on a perfluoro(alkyl vinyl ether), and an aqueous medium, wherein
   the proportion of the units based on a perfluoro(alkyl vinyl ether) is 20 to 60 mol% to the total amount of the units based on tetrafluoroethylene and the units based on a perfluoro(alkyl vinyl ether),
   the content of the fluorinated polymer is 0.1 to 40 mass% to the total mass of the aqueous dispersion,
   the average particle size of the fluorinated polymer is 1 to 150 nm,
   the concentration of fluoride ions is 50 mass ppm or less to the total mass of the aqueous medium in the aqueous dispersion,
   the concentration of sulfate ions is 50 mass ppm or less to the total mass of the aqueous medium in the aqueous dispersion, and
   the concentration of a hydrocarbon-based emulsifier is 100 mass ppm or less to the total mass of the fluorinated polymer.
[2] The aqueous dispersion according to [1], wherein the concentration of a fluorinated emulsifier is 100 mass ppm or less to the total mass of the fluorinated polymer.
[3] The aqueous dispersion according to [1] or [2], wherein the concentration of an emulsifier is 100 mass ppm or less to the total mass of the fluorinated polymer.
[4] The aqueous dispersion according to any one of [1] to [3], wherein the perfluoro(alkyl vinyl ether) is a monomer represented by the following formula (1):

   CF₂=CF-O-R^{f1} (1)

   in the formula (1), R^{f1} is a C₁₋₁₀ perfluoroalkyl group.
[5] A coated article, which comprises a substrate and a coating film formed on the substrate by using the aqueous dispersion as defined in any one of [1] to [4], wherein the substrate is made of an inorganic substance, an organic substance or an organic/inorganic composite material.

### ADVANTAGEOUS EFFECTS OF INVENTION

According to the present invention, it is possible to provide an aqueous dispersion which is excellent in storage stability and from which a coating film excellent in water resistance can be formed.

### DESCRIPTION OF EMBODIMENTS

Meanings of terms in the present invention are as follows.
" to " used to show a range of numerical values is used to include numerical values before and after it as the lower limit value and the upper limit value. In numerical ranges described stepwise in this specification, the upper limit value or the lower limit value described in a certain numerical range may be replaced with an upper limit value or a lower limit value of another numerical range described stepwise. In numerical ranges described in this specification, the upper limit value or the lower limit value described in a certain numerical range may be replaced with values indicated in Examples.

In this specification, as each component, a single type of a substance corresponding to the component may be used alone, or two or more types may be used in combination. In a case where two or more types are used in combination for each component, the content of the component means the total content of the substances used in combination, unless otherwise specified.

In this specification, a combination of two or more preferred embodiments corresponds to a more preferred embodiment.

"Units" generically mean an atomic group derived from one molecule of a monomer, directly formed by polymerization of the monomer, and an atomic group obtained by chemical conversion of a part of the atomic group. "Units based on a monomer" may sometimes be referred to simply as "units".

The content (mass% or mol%) of each units to all units which a polymer has, is obtained by analyzing the polymer by nuclear magnetic resonance spectroscopy (NMR), or can be estimated from the amount of charge of each monomer. Usually, the content of each units calculated from the amount of charge of each monomer, substantially agrees with the actual content of each units.

The average particle size of particles is a particle size calculated by analyzing the autocorrelation function acquired by dynamic light scattering, by monodisperse cumulant method.

### [Aqueous dispersion]

The aqueous dispersion of the present invention (hereinafter sometimes referred to as "present aqueous dispersion") is an aqueous dispersion containing a fluorinated polymer having units based on tetrafluoroethylene and units based on a perfluoro(alkyl vinyl ether) (hereinafter sometimes referred to as "specific fluorinated polymer"), and an aqueous medium.

In the specific fluorinated polymer, the proportion of the units based on a perfluoro(alkyl vinyl ether) is 20 to 60 mol% to the total amount of the units based on tetrafluoroethylene and the units based on a perfluoro(alkyl vinyl ether).

In the present aqueous dispersion, the content of the specific fluorinated polymer is 0.1 to 40 mass% to the total mass of the present aqueous dispersion.

In the present aqueous dispersion, the average particle size of the specific fluorinated polymer is 1 to 150 nm.

In the present aqueous dispersion, the concentration of fluoride ions is 50 mass ppm or less to the total mass of the aqueous medium in the present aqueous dispersion, and the concentration of sulfate ions is 50 mass ppm or less to the total mass of the aqueous medium in the present aqueous dispersion.

Further, in the present aqueous dispersion, the concentration of a hydrocarbon-based emulsifier is 100 mass ppm or less to the total mass of the specific fluorinated polymer.

The present aqueous dispersion is excellent in storage stability. The reason is estimated to be such that by using the fluorinated polymer having an average particle size within the above range, dispersion stability of particles of the fluorinated polymer in the aqueous medium improves.

The coating film formed by using the present aqueous dispersion is excellent in water resistance. The reason is estimated to be such that by the content of fluoride ions and the content of sulfate ions to the aqueous medium in the aqueous dispersion and the content of a hydrocarbon-based emulsifier to the aqueous dispersion being the preferred values or less, deposition and infiltration of water to the coating film can be suppressed. It is also estimated that by using the fluorinated polymer having an average particle size within the above range, in formation of the coating film, particles of the fluorinated polymer are densely packed and as a result, formation of pinholes in the coating film is suppressed, whereby water resistance of the coating film improves. It is considered that such effects are synergistically achieved, whereby the coating film excellent in water resistance can be obtained.

### <Specific fluorinated polymer>

The specific fluorinated polymer has units based on tetrafluoroethylene (hereinafter sometimes referred to as "TFE") and units based on a perfluoro(alkyl vinyl ether) (hereinafter sometimes referred to as "PAVE").

PAVE is preferably a monomer represented by the formula (1), whereby excellent polymerizability in production of the specific fluorinated polymer is achieved.

CF₂=CF-O-R^{f1} (1)

In the formula (1), R^{f1} is a C₁₋₁₀ perfluoroalkyl group. The number of carbon atoms in R^{f1} is preferably 1 to 8 in view of more excellent polymerizability, more preferably 1 to 6, further preferably 1 to 5, particularly preferably 1 to 3.

The perfluoroalkyl group may be linear or may be branched.

Specific examples of PAVE include perfluoro(methyl vinyl ether) (hereinafter sometimes referred to as "PMVE"), perfluoro(ethyl vinyl ether) (hereinafter sometimes referred to as "PEVE") and perfluoro(propyl vinyl ether) (hereinafter sometimes referred to as "PPVE"), and among them, preferred are PMVE and PPVE, in view of reactivity with tetrafluoroethylene in the aqueous medium, and more preferred is PMVE.

In the specific fluorinated polymer, the proportion of the PAVE units to the total amount of the TFE units and the PAVE units is 20 to 60 mol%, and preferably 25 to 60 mol%, more preferably 30 to 55 mol%, whereby the second fluorinated polymer can be produced more efficiently.

The specific fluorinated polymer may have units based on a monomer other than TFE and PAVE, however, it preferably has substantially no units based on other monomer, whereby more excellent effects of the present invention will be achieved.

"Have substantially no units based on other monomer" means that the content of the units based on other monomer is 0.01 mol% or less to all units of the specific fluorinated polymer, preferably 0 mol%.

In a case where the specific fluorinated polymer has units based on other monomer, the other monomer is preferably hexafluoropropylene.

The content of the specific fluorinated polymer is 0.1 to 40 mass% to the total mass of the present aqueous dispersion, and is preferably 5 mass% or more, more preferably 10 mass% or more, whereby thick coating will be possible, and is preferably 40 mass% or less, more preferably 30 mass% or less in view of storage stability.

The specific fluorinated polymer does not have a melting point.

The specific fluorinated polymer is dispersed in the form of particles in the aqueous medium.

The average particle size of the specific fluorinated polymer is 1 to 150 nm, and preferably 50 to 140 nm, more preferably 70 to 130 nm, whereby more excellent effects of the present invention will be achieved.

### <Aqueous medium>

The aqueous medium may be water, or a solvent mixture of water and a water-soluble organic solvent.

Specific examples of the water-soluble organic solvent include tert-butanol, propylene glycol, dipropylene glycol, dipropylene glycol monomethyl ether and tripropylene glycol.

The content of the aqueous medium is, to the total mass of the present aqueous dispersion, preferably 60 to 99 mass%, more preferably 65 to 99 mass%, further preferably 70 to 99 mass%.

### <Fluoride ions and sulfate ions>

Fluoride ions are generated by the reaction of a polymerization initiator and tetrafluoroethylene and may sometimes be included in the aqueous dispersion. Sulfate ions are generated for example by thermal decomposition of a polymerization initiator (particularly ammonium persulfate) used at the time of production of the specific fluorinated polymer and may sometimes be included in the aqueous dispersion. It is preferred that the fluoride ions and the sulfate ions are not included at all or included in a very small amount even if included in the present aqueous dispersion, with a view to improving water resistance of the coating film formed by using the present aqueous dispersion.

Specifically, the concentration of the fluoride ions and the concentration of the sulfate ions are each 50 mass ppm or less to the total mass of the aqueous medium in the present aqueous dispersion, preferably 30 mass ppm or less, more preferably 20 mass ppm or less, whereby the coating film formed by using the present aqueous dispersion will be more excellent in water resistance. The lower limit may be 0 mass ppm.

As an example of a method to adjust the concentration of the fluoride ions and the concentration of the sulfate ions to the aqueous medium in the present aqueous dispersion to be within the above range, a method of removing the fluoride ions and the sulfate ions by using an ion exchange resin or the like as described hereinafter may be mentioned.

### <Emulsifier>

The hydrocarbon-based emulsifier means an emulsifier wherein in the hydrophilic segment and the hydrophobic segment of the emulsifier, the hydrophobic segment is mainly composed of a hydrocarbon group.

Specific examples of the hydrocarbon-based emulsifier include an anionic hydrocarbon-based emulsifier such as an alkylbenzene sulfonate, a higher fatty acid salt, a salt of an alkyl sulfate, an alkyl sulfonate and a salt of an alkyl ether sulfate; a cationic hydrocarbon-based emulsifier such as an alkylamine salt, a quaternary alkylammonium salt and a benzalkonium salt; and a nonionic hydrocarbon-based emulsifier such as a polyoxyethylene alkyl ether, a polyoxyethylene alkyl phenyl ether, a polyoxyethylene alkyl ester, a sorbitan alkyl ester, a polyoxyethylene sorbitan alkyl ester and glycerol ester.

In the present aqueous dispersion, the concentration of the hydrocarbon-based emulsifier is, to the total mass of the specific fluorinated polymer, 100 mass ppm or less, and preferably 80 mass ppm or less, whereby the coating film formed by using the present aqueous dispersion will be more excellent in water resistance, more preferably 50 mass ppm or less. The lower limit may be 0 mass ppm.

The fluorinated emulsifier means an emulsifier wherein in the hydrophilic segment and the hydrophobic segment of the emulsifier, the hydrophobic moiety contains a fluorine atom. Specific examples of the fluorinated emulsifier include a fluorinated alkanoic acid salt and a fluorinated ether carboxylic acid compound.

As a preferred embodiment of the present aqueous dispersion, an embodiment in which the concentration of the fluorinated emulsifier is 100 mass ppm or less to the total mass of the specific fluorinated polymer.

In the present aqueous dispersion, the concentration of the fluorinated emulsifier is, to the total mass of the specific fluorinated polymer, preferably 100 mass ppm or less, more preferably 75 mass ppm or less, further preferably 50 mass ppm or less. The lower limit may be 0 mass ppm. When the concentration of the fluorinated emulsifier is 100 mass ppm or less the total mass of the specific fluorinated polymer, the coating film formed by using the present aqueous dispersion will be more excellent in water resistance.

The emulsifier means all types of emulsifier and not only includes the hydrocarbon-based emulsifier and the fluorinated emulsifier but also include another emulsifier (for example, a silicon-based emulsifier wherein the hydrophobic segment contains a silicon atom).

In the present aqueous dispersion, the concentration of the emulsifier is, to the total mass of the specific fluorinated polymer, preferably 100 mass ppm or less, more preferably 75 mass ppm or less, further preferably 50 mass ppm or less. The lower limit may be 0 mass ppm. When the concentration of the emulsifier is 100 mass ppm or less to the total mass of the specific fluorinated polymer, the coating film formed by using the present aqueous dispersion will be more excellent in water resistance.

As an example of a method to adjust the concentration of the emulsifier to be within the above range, a method of producing the present aqueous dispersion without using the emulsifier may be mentioned.

### <Other component>

The present aqueous dispersion may contain a component other than the above components, within a range where the effects of the present invention will be sufficiently achieved.

Specific examples of the other component which the present aqueous dispersion may contain, include additives which a conventional coating material may contain, such as a curing agent, a curing catalyst, a resin other than the specific fluorinated polymer (e.g. a (meth)acrylic resin, a urethane resin and an epoxy resin), a coloring agent (a dye, an organic pigment, an inorganic pigment or a luster pigment using a metal, mica or the like), an ultraviolet absorber, a flatting agent, a leveling agent, a surface modifier, a degassing agent, a filler, a thickener, an antistatic agent, an anti-corrosive agent, a silane coupling agent, an antifouling agent, a contamination reducing agent, a plasticizer and an adhesive.

In a case where the present aqueous dispersion contains the other component, the content of the other component is preferably 1 to 90 mass%, more preferably 10 to 80 mass% to the total mass of the present aqueous dispersion.

### <Method for producing aqueous dispersion>

As an example of a method for producing the present aqueous dispersion, an embodiment may be mentioned having a polymerization step of polymerizing monomers comprising TFE and PAVE in an aqueous medium in the presence of a polymerization initiator to obtain a dispersion containing the specific fluorinated polymer and the aqueous medium, and a removal step of removing the fluoride ions and the sulfate ions in the dispersion.

The aqueous medium having particles of the specific fluorinated polymer dispersed thus obtained may be used as it is as the present aqueous dispersion, or may further be mixed with other aqueous medium and used as the present aqueous dispersion. Otherwise, the specific fluorinated polymer may be dispersed in other aqueous medium by solvent replacement, and the dispersion may be used as the present aqueous dispersion.

Specific examples of the aqueous medium used in the polymerization step are the same as the specific examples of the aqueous medium contained in the present aqueous dispersion.

The monomer used in the polymerization step comprises TFE and PAVE and may further contain other monomer, but preferably contains no other monomer. A preferred embodiment of PAVE is as described above. The amount of the monomer used may be properly adjusted so that the contents of the respective units in the obtained specific fluorinated polymer are within the above ranges.

The amount of the monomer used is preferably 3 to 20 parts by mass, more preferably 5 to 10 parts by mass per 100 parts by mass of the aqueous medium used in the polymerization step.

The polymerization initiator is preferably a water-soluble polymerization initiator, more preferably a persulfate such as ammonium persulfate, sodium persulfate or potassium persulfate, or an organic polymerization initiator such as disuccinic peroxide or azobisisobutylamidine dihydrochloride, more preferably a persulfate, particularly preferably ammonium persulfate. The polymerization initiator may be used in combination of two or more.

The amount of the polymerization initiator used is preferably 0.1 to 3 parts by mass, more preferably 0.2 to 2 parts by mass per 100 parts by mass of the monomer used.

In the polymerization step, a chain transfer agent component may be used.

The monomer is charged into a reaction system (that is a polymerization reactor) by a conventional method. For example, the monomer may be charged into the reaction system continuously or intermittently so as to keep a predetermined polymerization pressure. Otherwise, the monomer may be dispersed or dissolved in the aqueous medium and the obtained liquid mixture is continuously or intermittently charged into the reaction system.

The polymerization initiator may be added to the reaction system all at once or dividedly.

The polymerization temperature is preferably 10 to 95°C, more preferably 15 to 90°C.

The polymerization pressure is preferably 0.5 to 4.0 MPaG, more preferably 0.6 to 3.5 MPaG.

The polymerization time is preferably 30 to 1000 minutes, more preferably 50 to 700 minutes in the case of batch treatment.

The polymerization step is carried out preferably substantially in the absence of the hydrocarbon-based emulsifier, more preferably substantially in the absence of the hydrocarbon-based emulsifier and the fluorinated emulsifier, further preferably substantially in the absence of the emulsifier. Specific examples of the respective emulsifiers are as described above.

"Substantially in the absence of the hydrocarbon-based emulsifier" means an environment in which the content of the hydrocarbon-based emulsifier is 100 mass ppm or less to the total mass of the aqueous medium used in the polymerization step, preferably 50 mass ppm or less, more preferably 0 mass ppm.

"Substantially in the absence of the hydrocarbon-based emulsifier and the fluorinated emulsifier" means an environment in which the total content of the hydrocarbon-based emulsifier and the fluorinated emulsifier is 100 mass ppm or less to the total mass of the aqueous medium used in the polymerization step, preferably 50 mass ppm or less, more preferably 0 mass ppm.

"Substantially in the absence of the emulsifier" means an environment in which the content of the emulsifier is 100 mass ppm or less to the total mass of the aqueous medium used in the polymerization step, preferably 50 mass ppm or less, more preferably 0 mass ppm.

In the removal step, the fluoride ions and the sulfate ions which may be included in the dispersion are removed. As a means to remove the fluoride ions and the sulfate ions, an ion exchange resin (preferably an anion exchange resin) may be mentioned.

The removal step may be conducted several times until the concentration of the fluoride ions and the concentration of the sulfate ions in the obtained present aqueous dispersion would be within the above ranges.

### <Application>

The present aqueous dispersion may be suitably used as a coating material itself or as a material for a coating material.

### [Coated article]

The coated article of the present invention comprises a substrate and a coating film formed on the substrate, by using the present aqueous dispersion.

Specific examples of the material of the substrate include an inorganic substance, an organic substance and an organic/inorganic composite material.

Specific examples of the inorganic substance include concrete, natural stone, glass, and a metal (e.g. iron, stainless steel, aluminum, an aluminum alloy, copper, brass and titanium).

Specific examples of the organic substance include a plastic, a rubber, an adhesive and a wood material.

Specific examples of the organic/inorganic composite material include a fiber-reinforced plastic, resin-reinforced concrete and fiber-reinforced concrete.

The substrate may have a known surface treatment (e.g. chemical conversion treatment) applied. The substrate may have on its surface a resin layer formed by applying a primer or the like (e.g. a polyester resin layer, an acrylic resin layer or a silicone resin layer).

The film thickness of the coating film is preferably 1 to 200 µm, more preferably 10 to 100 µm, whereby the coated article will be more excellent in weather resistance.

The method for producing the coated article is a method of applying the present aqueous dispersion to the substrate to form the coating film. The coating film may be formed by applying the present aqueous dispersion to the substrate, and as the case requires, drying the present aqueous dispersion, followed by heat-curing.

The present aqueous dispersion may be applied directly to the surface of the substrate, or may be applied to the surface of the substrate having a known surface treatment (such as surface preparation) applied. Or, the present aqueous dispersion may be applied to a primer layer formed on the substrate. Otherwise, the present aqueous dispersion may be applied to an article having the substrate.

The coating method may, for example, be spray coating method, squeegee coating method, flow coating method, bar coating method, spin coating method, dip coating method, screen printing method, gravure printing method, die coating method, ink jetting method, curtain coating method or method using a brush or a knife.

### EXAMPLES

Now, the present invention will be described in further detail with reference to Examples. Ex. 1 is an Example of the present invention, and Ex. 2 to 4 are Comparative Examples. It should be understood that the present invention is by no means restricted thereto.

### [Measurement]

### <Average particle size of particles in aqueous dispersion>

Using the aqueous dispersion as a sample, measured by means of a laser diffraction/scattering particle size distribution measuring apparatus (ELSZ manufactured by Otsuka Electronics Co., Ltd.).

### <Proportion of units in polymer>

The proportion of each units in the polymer was obtained by ¹⁹F-NMR analysis.

### <Concentration of fluoride ions and concentration of sulfate ions>

The concentration of fluoride ions and the concentration of sulfate ions to the total mass of the aqueous medium in the aqueous dispersion were measured as follows. The aqueous dispersion was freeze-agglomerated and subjected to filtration, and the obtained aqueous medium was analyzed by ion chromatography.

For the analysis by ion chromatography, an ion chromatograph ICS-5000 (manufactured by Thermo Fisher Scientific) was used. The separation column used was Dionex IonPac AS-19, the guard column used was Dionex IonPac AG-19, and the eluent used was KOH.

### <Concentration of emulsifier>

The concentrations of a hydrocarbon-based emulsifier, a fluorinated emulsifier and an emulsifier were calculated from the amounts of charge to the total mass of the fluorinated polymer in the aqueous dispersion.

### [Production of aqueous dispersion A]

Into a 2.1L stainless steel pressure resistant reactor, ultrapure water (1162 g), a 28% aqueous NH₃ solution (one drop), PMVE (70 g) and TFE (14 g) were charged and heated to 80°C with stirring at 600 rpm. An aqueous ammonium persulfate solution (5.9 mass%, 5 cc) was added to initiate the polymerization. Since the pressure in the reactor decreased as the polymerization started, TFE was added to keep a constant pressure. Upon injection of 24 g of TFE, the reactor was cooled to terminate the polymerization reaction. The gas remaining in the reactor was recovered, followed by replacement with nitrogen. The pressure in the reactor was decreased to -0.1 MPaG, followed by heating to 60°C. 980 g of water was removed from the reactor, followed by cooling, and the liquid in the reactor was withdrawn. This liquid was taken as aqueous dispersion A. The aqueous dispersion A had particles (average particle size: 110 nm) of fluorinated polymer 1A dispersed in the aqueous medium, and the content of the fluorinated polymer 1A was 20 mass% to the total mass of the aqueous dispersion A.

The aqueous dispersion A was freeze-agglomerated and subjected to filtration, and the obtained fluorinated polymer 1A was washed with ultrapure water and vacuum dried at 100°C. The obtained fluorinated polymer 1A was analyzed by NMR and as a result, PMVE units/TFE units=34.4/65.6 (molar ratio).

### [Production of aqueous dispersion B]

An ion exchange resin (Purolite A300 (manufactured by Purolite), anion exchange resin, 15 g) was added to the aqueous dispersion A (100 g) and stirred for 60 minutes. Then, the aqueous dispersion was separated from the ion exchange resin by filtration to obtain aqueous dispersion B. The aqueous dispersion B was a dispersion having particles (average particle size: 110 nm) of the fluorinated polymer 1A dispersed in the aqueous medium, and the content of the fluorinated polymer 1A was 20 mass% to the total mass of the aqueous dispersion B.

### [Production of aqueous dispersion C]

Into a 2.1 L stainless steel pressure resistant reactor, ultrapure water (1082 g), disodium hydrogenphosphate dodecahydrate (10.5 g), a 30 mass% aqueous EEA solution (aqueous solution of CF₃CF₂-O-CF₂CF₂-O-CF₂COONH₄) (80.1 g), PMVE (70 g) and TFE (14 g) were charged and heated to 80°C with stirring at 600 rpm. An aqueous ammonium persulfate solution (1.0 mass%, 20 cc) was added to initiate the polymerization. Since the pressure in the reactor decreased as the polymerization started, TFE was added to keep a constant pressure. 7 g of PMVE was injected for every injection of 8 g of TFE. Upon injection of 160 g of TFE, the reactor was cooled to terminate the polymerization reaction. The gas remaining in the reactor was recovered, and the liquid was withdrawn. This liquid was taken as aqueous dispersion C. The aqueous dispersion C is a dispersion having particles of fluorinated polymer 1C dispersed in the aqueous medium.

The aqueous dispersion C was freeze-agglomerated and subjected to filtration, and the obtained fluorinated polymer 1C was washed with ultrapure water and vacuum dried at 100°C. The obtained fluorinated polymer 1C was analyzed by NMR and as a result, PMVE units/TFE units=34/66 (molar ratio).

### [Production of aqueous dispersion D]

1 g of TERGITOL TMN-100X (manufactured by Dow, nonionic hydrocarbon-based emulsifier) and an ion exchange resin (Purolite A300 (manufactured by Purolite), anion exchange resin, 15 g) were added to the aqueous dispersion C (100 g) and stirred for 60 minutes. The aqueous dispersion was separated from the ion exchange resin by filtration to obtain aqueous dispersion D. The aqueous dispersion D was a dispersion having particles (average particle size: 84 nm) of the fluorinated polymer 1C dispersed in the aqueous medium, and the content of the fluorinated polymer 1C was 21 mass% to the total mass of the aqueous dispersion D.

### [Production of aqueous dispersion E]

Into a 2.1 L stainless steel pressure resistant reactor, ultrapure water (1170 g), disodium hydrogenphosphate dodecahydrate (10.5 g), PMVE (75 g) and TFE (14 g) were charged and heated to 80°C with stirring at 600 rpm. An aqueous ammonium persulfate solution (20 mass%, 5 cc) was added to initiate the polymerization. Since the pressure in the reactor decreased as the polymerization started, TFE was added to keep a constant pressure. 7 g of PMVE was injected for every injection of 8 g of TFE. Upon injection of 160 g of TFE, the reactor was cooled to terminate the polymerization. The gas remaining in the reactor was recovered, and the liquid was withdrawn. This liquid was taken as fluorinated elastomer dispersion E. The aqueous dispersion E was a dispersion having particles (average particle size: 290 nm) of fluorinated polymer 1E dispersed in the aqueous medium.

The aqueous dispersion E was freeze-agglomerated and subjected to filtration, and the obtained fluorinated polymer 1E was washed with ultrapure water and vacuum dried at 100°C. The obtained fluorinated polymer 1E was analyzed by NMR and as a result, PMVE units/TFE units=33.3/66.7 (molar ratio).

The concentration of the sulfate ions to the total mass of the aqueous medium in the aqueous dispersion E was 2000 mass ppm.

### [Production of aqueous dispersion F]

An ion exchange resin (Purolite A300 (manufactured by Purolite), anion exchange resin, 15 g) was added to the aqueous dispersion E (100 g) and stirred for 60 minutes. Then, the aqueous dispersion was separated from the ion exchange resin by filtration to obtain aqueous dispersion F. The aqueous dispersion F was a dispersion having particles (average particle size: 290 nm) of fluorinated polymer 1E dispersed in the aqueous medium, and the content of the fluorinated polymer 1E was 20 mass% to the total mass of the aqueous dispersion F.

### [Ex. 1]

The aqueous dispersion B was used as aqueous dispersion in Ex. 1.

### [Ex. 2]

The aqueous dispersion A was used as aqueous dispersion in Ex. 2.

### [Ex. 3]

The aqueous dispersion D was used as aqueous dispersion in Ex. 3.

### [Ex. 4]

The aqueous dispersion F was used as aqueous dispersion in Ex. 4.

### [Evaluation test]

### <Storage stability>

The storage stability of the aqueous dispersion was evaluated by the following test.

50 cc of the aqueous dispersion in each Ex. was put in a centrifuge tube and left to stand at room temperature (23°C) for 2 weeks, and the amount of sediment (particles of the fluorinated polymer) on the bottom of the centrifuge tube was read from the scale and evaluated based on the following standards.
A: 0 to 0.1cc
B: more than 0.1 cc

### <Moisture resistance 1>

V-CERAN (registered trademark) #700 manufactured by Dai Nippon Toryo Company, Limited was applied to the surface of a slate plate of 120 mm × 60 mm × 15 mm in thickness, by an air spray so that the dry film thickness would be 20 µm and dried at 100°C for 210 seconds to form a primer layer. Then, the aqueous dispersion in each Ex. was applied to the primer layer by an air spray so that the dry film thickness would be 40 µm and dried at 120°C for 210 seconds to form a coating film to obtain a test plate in each Ex.

The test plate was subjected to a test of being immersed in warm water of 60°C for 18 hours, immersed in cold water of 5°C for 15 hours and dried at 5°C. After drying, the outer appearance of the coating film was evaluated based on the following standards.
A: no whitening nor swelling confirmed on 80% or more of the coating surface area.
B: whitening or swelling confirmed on 20% or more of the coating surface area.

### <Moisture resistance 2>

The test plate obtained in the above <Moisture resistance 1> was subjected to a test of being immersed in warm water of 60°C for 2 weeks and dried at 5°C. After drying, the outer appearance of the coating film was evaluated based on the following standards.
A: no whitening nor swelling confirmed on 80% or more of the coating surface area.
B: no whitening nor swelling confirmed on 60% or more and less than 80% of the coating surface area.
C: whitening or swelling confirmed on 40% or more of the coating surface area.

**[Table 1]**

| | | Ex. 1 | Ex. 2 | Ex. 3 | Ex. 4 |
|---|---|---|---|---|---|
| Type of aqueous dispersion | | B | A | D | F |
| Composition of fluorinated polymer | PMVE/TFE (molar ratio) | 34.4/65.6 | 34.4/65.6 | 34.0/66.0 | 33.3/66.7 |
| Content of fluorinated polymer (mass%) | | 20 | 20 | 21 | 20 |
| Average particle size of fluorinated polymer (nm) | | 110 | 110 | 84 | 290 |
| Concentration of fluoride ions (mass ppm) | | Less than 0.1 | 620 | Less than 0.1 | Less than 0.1 |
| Concentration of sulfate ions (mass ppm) | | Less than 0.1 | 690 | Less than 0.1 | Less than 0.1 |
| Concentration of hydrocarbon-based emulsifier (mass ppm) | | 0 | 0 | 9900 | 0 |
| Concentration of fluorinated emulsifier (mass ppm) | | 0 | 0 | 20290 | 0 |
| Concentration of emulsifier (mass ppm) | | 0 | 0 | 30190 | 0 |
| Evaluation results | Storage stability | A | A | A | B |
| | Water resistance 1 | A | B | B | B |
| | Water resistance 2 | A | B | C | B |

It was found that the aqueous dispersion of the present invention is excellent in storage stability, and a coating film excellent in water resistance can be formed from it (Ex. 1).

The entire disclosure of Japanese Patent Application No. 2022-201101 filed on December 16, 2022 including specification, claims and summary is incorporated herein by reference in its entirety.

## Claims

1. An aqueous dispersion containing a fluorinated polymer having units based on tetrafluoroethylene and units based on a perfluoro(alkyl vinyl ether), and an aqueous medium, wherein
the proportion of the units based on a perfluoro(alkyl vinyl ether) is 20 to 60 mol% to the total amount of the units based on tetrafluoroethylene and the units based on a perfluoro(alkyl vinyl ether),
the content of the fluorinated polymer is 0.1 to 40 mass% to the total mass of the aqueous dispersion,
the average particle size of the fluorinated polymer is 1 to 150 nm,
the concentration of fluoride ions is 50 mass ppm or less to the total mass of the aqueous medium in the aqueous dispersion,
the concentration of sulfate ions is 50 mass ppm or less to the total mass of the aqueous medium in the aqueous dispersion, and
the concentration of a hydrocarbon-based emulsifier is 100 mass ppm or less to the total mass of the fluorinated polymer.

2. The aqueous dispersion according to Claim 1, wherein the concentration of a fluorinated emulsifier is 100 mass ppm or less to the total mass of the fluorinated polymer.

3. The aqueous dispersion according to Claim 1 or 2, wherein the concentration of an emulsifier is 100 mass ppm or less to the total mass of the fluorinated polymer.

4. The aqueous dispersion according to Claim 1 or 2, wherein the perfluoro(alkyl vinyl ether) is a monomer represented by the following formula (1):
CF₂=CF-O-R^{f1} (1)
in the formula (1), R^{f1} is a C₁₋₁₀ perfluoroalkyl group.

5. A coated article, which comprises a substrate and a coating film formed on the substrate by using the aqueous dispersion as defined in Claim 1 or 2, wherein the substrate is made of an inorganic substance, an organic substance or an organic/inorganic composite material.
